# NEUE EUROPÄISCHE PATENTSCHRIFT

(11) **EP 1 489 300 B2**
(45) Veröffentlichungstag und Bekanntmachung des Hinweises auf die Entscheidung über den Einspruch: **01.04.2020**
(45) Hinweis auf die Patenterteilung: 12.11.2014
(21) Anmeldenummer: 04104405.8
(22) Anmeldetag: 12.04.2002
(51) Int. Cl.: F03D 7/04, F03D 7/02, F03D 9/00

(54) **Windenergieanlage und Verfahren zum Betreiben einer Windenergieanlage**
Control method for wind turbine
Procédé de commande d'une éolienne

(30) Priorität: 20.04.2001 DE 10119624; 04.08.2001 DE 10138399
(43) Veröffentlichungstag der Anmeldung: 22.12.2004
(62) Teilanmeldung aus: 02748656.2
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 677 911
- WO-A-01/25630
- WO-A1-99/52193
- DE-A- 10 019 362
- DE-A- 10 022 974
- DE-A- 10 059 018
- Anonym: "Specifications for Connecting Wind Farms to the Transmission Network. Second Ed.", Eltra, no. 74557 ,

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an ein elektrisches Netz.

Die Erfindung betrifft ferner eine Windenergieanlage mit einem Rotor und einem mit dem Rotor gekoppelten elektrischen Generator zum Abgeben elektrischer Leistung an ein elektrisches Netz.

Bei den bekannten Windenergieanlagen zum Erzeugen elektrischer Energie aus Windenergie wird der Generator mit dem elektrischen Verbraucher, häufig einem elektrischen Netz, im Parallelbetrieb betrieben. D.h., so lange das Windangebot mit einer ausreicht, wird die Windenergieanlage elektrische Energie erzeugen und in das Netz einspeisen vgl. z.B. WO-A-93/11604.

Kommt es jedoch im Netz zu einer Störung, z.B. infolge eines Kurzschlusses im Netz, werden die Windenergieanlagen bislang von dem Netz getrennt und erst nach dem Wiederherstellen normaler Betriebsbedingungen an das Netz angeschaltet.

Dadurch ist ein rasches Stützen des Netzes nach dem Auftreten einer Störung, welches insbesondere bei großen Spannungs- bzw. Leistungsbedarfs-Schwankungen erforderlich ist, nicht mehr möglich.

Aus WO 99/52193 ist ein "Power Controller" für eine Windenergieanlage bekannt, welche in der Lage ist, im Falle eines Netzkurzschlusses mit dem Netz verbunden zu bleiben.

Aufgabe der vorliegenden Erfindung ist es daher, eine Steuerung für eine oder mehrere Windenergieanlagen anzugeben, welche Schwankungen im Netz weitestmöglich entgegenwirkt.

Diese Aufgabe wird gemäß einem Verfahren wie im Anspruch 2 angegeben gelöst.

Bei einer Vorrichtung der eingangs genannten Art wird die Aufgabe gelöst durch eine Windenergieanlage wie im Anspruch 1 angegeben.

Auf diese Weise kann bei schwankenden Leistungsanforderungen aus dem Netz die benötigte Leistung erzeugt und eingespeist werden.

Um im Falle einer Störung im Netz, z.B. in Folge eines Kurzschlusses im Netz, eine Überlastung von Teilen der Windenergieanlage und/oder des Netzes zu vermeiden, wird die Windenergieanlage derart gesteuert, dass der an das Netz abgegebene Strom einen vorgegebenen Wert nicht überschreitet.

In einer besonders bevorzugten Ausführungsform der Erfindung wird die Höhe dieses maximal abgebbaren Stromes für jede Phase des Netzes geregelt, um einerseits das Netz so weit wie möglich stützen zu können, ohne andererseits Komponenten der Gefahr einer Schädigung auszusetzen.

Durch einen externen Eingang wird die Windenergieanlage entsprechend den Vorgaben einer entfernten Steuerungszentrale betrieben. Auf diese Weise kann z.B. ein Energieversorgungsunternehmen von der Windenergieanlage den gerade zur Netzstützung benötigten Strom abfordern.

Weitere vorteilhafte Ausführungsformen sind in den Unteransprüchen angegeben.

Nachfolgend wird eine Ausführungsform der Erfindung anhand der Figuren näher beschrieben. Dabei zeigen:
- Fig. 1: eine in ein Netz einspeisende Windenergieanlage in einer vereinfachten Darstellung;
- Fig. 2: eine erfindungsgemäße Regelungseinrichtung zum Betreiben einer Windenergieanlage; und
- Fig. 3: ein Blockschaltbild wesentlicher Bestandteile der Steuerungs- und Regelungsanordnung.

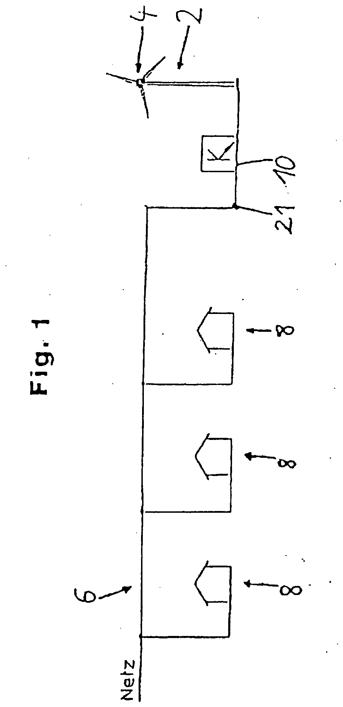

Eine in Figur 1 vereinfacht dargestellte Windenergieanlage 2 mit einem Rotor 4 ist mit einem elektrischen Netz 6 verbunden, das beispielsweise ein öffentliches Netz sein kann. An das Netz sind mehrere elektrische Verbraucher 8 angeschlossen. Der in Figur 1 nicht dargestellte elektrische Generator der Windenergieanlage 2 ist mit einer elektrischen Steuerungs- und Regelungs-Anordnung 10 gekoppelt, die den in dem Generator erzeugten Wechselstrom zunächst gleichrichtet und a n-schließend in einen Wechselstrom mit einer der Netzfrequenz entsprechenden Frequenz umwandelt. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

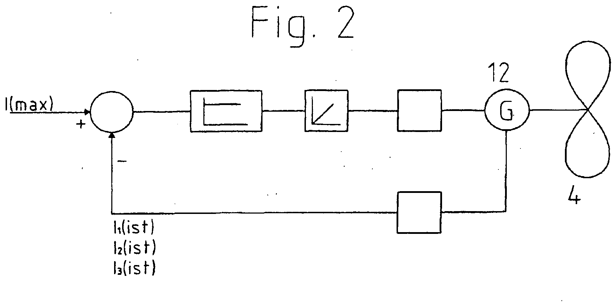

Figur 2 veranschaulicht die erfindungsgemäße Regelungseinrichtung. Der vereinfacht dargestellte Rotor 4 ist mit einem Generator 12 gekoppelt, der eine elektrische Leistung bereitstellt, die von der Windgeschwindigkeit und somit der Windleistung abhängt. Der in dem Generator 12 erzeugte Wechselstrom wird zunächst gleichgerichtet und anschließend in einen Wechselstrom umgewandelt, der eine der Netzfrequenz entsprechende Frequenz aufweist.

Mit Hilfe eines Stromaufnehmers (nicht dargestellt) wird der in das Netz 6 (Figur 1) eingespeiste Strom ermittelt. Dabei wird der Strom mit einem vorgegebenen Wert I(max) verglichen.

Überschreitet nun der in das Netz 6 eingespeiste Strom den vorgegebenen Maximalwert I(max), wird durch die Regelungseinrichtung die von der gesamten Windenergieanlage (und/oder deren Generator) erzeugte Leistung so eingestellt, dass der eingespeiste Strom den vorgegebenen Grenzwert I(max) nicht überschreitet. Bei einem Kurzschluss kann dies beispielsweise dadurch geschehen, dass die Windenergieanlage eine deutlich geringere Leistung als zuvor in das Netz einspeist, die damit nicht ins Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder andere Zwischenspeicher. Sobald das Netz dann wieder vollständig zur Verfügung steht, kann auch die gespeicherte Energie ins Netz wieder abgegeben werden.

Auf diese Weise kann selbst bei einem Kurzschluss im Netz die Windenergieanlage weiterhin Leistung an das Netz abgeben und das Netz stützen, ohne dass in Folge des Kurzschlusses der Strom den vorgegebenen Grenzwert überschreitet.

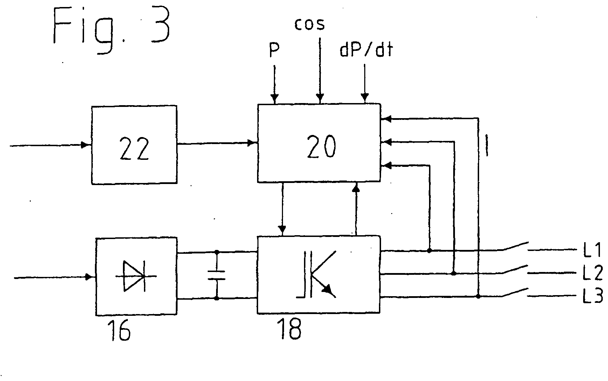

Figur 3 zeigt Bestandteile der Steuerungs- und Regelungsanordnung 10 in Figur 1. Die Steuerungs- und Regelungsanordnung 10 weist einen Gleichrichter 16 auf, in dem der von dem Generator erzeugte Wechselstrom gleichgerichtet wird. Ein mit dem Gleichrichter 16 verbundener Wechselrichter 18 wandelt den Gleichstrom wiederum in einen Wechselstrom um, der eine der Netzfrequenz entsprechende Frequenz aufweist. Dieser Strom wird über drei Phasen L1, L2 und L3 in das Netz 6 eingespeist. Der Wechselrichter 18 wird mit Hilfe eines Mikrocomputers 20, der Teil der Regelungseinrichtung ist, gesteuert. Dazu ist der Mikroprozessor 20 mit dem Wechselrichter 18 gekoppelt. Als Eingangsgrößen für die Regelung des Stromes, mit dem die von der Windenergieanlage 2 zur Verfügung gestellte elektrische Leistung in das Netz 6 eingespeist wird, sind der aktuelle Strom bzw. die aktuellen Ströme, die Netzfrequenz, die elektrische Leistung P des Generators, der Leistungsfaktor cos sowie der Leistungsgradient dP/dt vorgesehen. In dem Mikroprozessor 20 wird die erfindungsgemäße Regelung des einzuspeisenden Stromes verwirklicht. Dabei wird der Strom auf jeder der Phasen L1, L2 und L3 separat erfasst und mit seinem Betrag in der erfindungsgemäßen Regelung berücksichtigt.

Steigt nunmehr der gemessene Strom(betrag) I(ist) einer Phase über einen vorbestimmten Maximalwert an, wird der Wechselrichter 18 so gesteuert, dass der Strom(betrag) unter den vorgegebenen Maximalstroms I(max) sinkt und die dann erzeugte elektrische Energie aus Windenergie, die aufgrund der Strombegrenzung nicht ins Netz eingespeist wird, wird anderweitig verwendet, beispielsweise über einen Widerstand (Dumpload) gegeben oder in einem Zwischenspeicher (z.B. Kondensator, Ultracap) gespeichert.

Dabei kann die Steuerung der Windenergieanlage selbsttätig arbeiten. Die Windenergieanlage erfasst dann einen Kurzschluss im Netz z.B. durch die Überwachung der Spannungen der einzelnen Phasen des Netzes und/oder deren Phasenlage. Werden für Spannungen und/oder Phasendifferenzen vorgebbare Grenzwerte erreicht, erkennt die Windenergieanlage einen Kurzschluss und arbeitet nach einem für diesen Fall vorgesehen Algorithmus.

Durch den externen Zugang (22) ergibt sich, z.B. für das Energieversorgungsunternehmen, an dessen Netz die Windenergieanlage angeschlossen ist, die Möglichkeit besteht, in den Betrieb der Windenergieanlage einzugreifen und beispielsweise den Betrag des einzuspeisenden Stromes, die Art des Stromes (Wirkstrom, Blindstrom) und/oder den Phasenwinkel und/oder Phasenlage usw. zu verändern. Auf diese Weise kann das Energieversorgungsunternehmen genau diejenigen Werte (den Strom, die Spannung, die elektrische Leistung) für die von der Windenergieanlage in das Netz einzuspeisende Leistung einstellen, die dem Bedarf des Netzbetreibers entsprechen.

## Patentansprüche

1. Windenergieanlage (2) mit einem Rotor und einem mit dem Rotor gekoppelten elektrischen Generator zum Abgeben elektrischer Leistung an ein elektrisches Netz, wobei die Windenergieanlage eine Regelungseinrichtung mit einem Stromaufnehmer zum Aufnehmen des an ein Netz (6) abgegebenen elektrischen Stromes aufweist, so dass die von dem Generator an das Netz abgegebene Leistung in Abhängigkeit von dem durch den Stromaufnehmer aufgenommenen Strom regelbar ist und wobei die Windenergieanlage (2) einen externen Steuereingang (22) zur Übergabe von Daten einer entfernten Steuerungszentrale an eine Regelungseinrichtung (20) der Windenergieanlage (2) aufweist, wobei, im Betrieb über den externen Steuereingang (22) Steuersignale vom Netzbetreiber oder Energieversorger, der das Netz betreibt, empfangen werden und in Abhängigkeit dieser Steuersignale vom Netzbetreiber die Windenergieanlage nach Bedarf des Netzbetreibers gesteuert wird und somit die elektrische Leistung, nämlich der Betrag des einzuspeisenden Stromes, die Art des Stromes und/oder Phasenwinkel und/oder Phasenlage, in einer Form in das Netz eingespeist wird, wie dies vom Netzbetreiber erfordert wird, und wobei die Windenergieanlage am Netz bleibt, wenn sich im Netz ein Kurzschluss oder eine vergleichbare Betriebsstörung einstellt, beispielsweise die Spannung einen Wert annimmt, der mehr als 20% vom Sollwert abweicht, wobei die Windenergieanlage eine Vorrichtung zur Erfassung eines Kurzschlusses im Netz aufweist und die Windenergieanlage eine Spannungserfassungseinrichtung zum Erfassen der Spannung wenigstens einer Phase im Netz aufweist und die Windenergieanlage im Fall eines Netzkurzschlusses den abgegebenen, in das Netz eingespeisten Strom so einstellt, dass ein vorgegebener Grenzwert I(max) nicht überschritten wird.

2. Verfahren zum Betrieb einer Windenergieanlage nach Anspruch 1,
wobei die von dem Generator (12) an den Verbraucher abgegebene Leistung in Abhängigkeit von dem Betrag des an den Verbraucher abgegebenen Stroms geregelt wird.

3. Verfahren zum Betrieb einer Windenergieanlage nach Anspruch 1 oder 2,
wobei der Strom ein Wechselstrom mit einer vorgebbaren Frequenz ist.

4. Verfahren nach Anspruch 3,
wobei die vorgebbare Frequenz im wesentlichen der Netzfrequenz entspricht.

5. Verfahren zum Betrieb einer Windenergieanlage nach einem der vorstehenden Ansprüche,
wobei der abgegebene Strom einen vorgebbaren Betrag nicht überschreitet, eine vorgebbare Phasenlage aufweist und/oder einen vorgebbaren Blindstrom-Anteil enthält.

6. Verfahren nach Anspruch 5,
wobei bei mehrphasigen Systemen Betrag, Phasenlage und/oder Blindstrom-Anteil für jede Phase den vorgebbaren Wert nicht überschreiten.

7. Verfahren nach Anspruch 5 oder 6,
wobei für jede Phase ein von den übrigen Phasen unabhängiger Wert vorgebbar ist.

8. Verfahren zum Betrieb einer Windenergieanlage nach einem der vorstehenden Ansprüche,
wobei der Strom für jede von einem Kurzschluss betroffene Phase auf dem Momentanwert im Moment des Kurzschlusses begrenzt wird.

9. Windenergieanlage nach Anspruch 1,
wobei die Regelungseinrichtung einen Mikroprozessor (20) aufweist.

10. Windenergieanlage nach Anspruch 1,
mit einem Phasenwächter zum Erfassen der Phasenlage der Ströme und/oder Spannungen wenigstens einer Phase im Netz.

11. Windenergieanlage nach Anspruch 1,
wobei die Windenergieanlage am Netz bleibt, wenn sich im Netz ein Kurzschluss oder eine vergleichbare Betriebsstörung einstellt, beispielsweise die Spannung einen Wert annimmt, der mehr als 40% vom Sollwert abweicht.

## Claims

1. Wind energy installation (2) having a rotor and having an electrical generator which is coupled to the rotor for emission of electrical power to an electrical grid, wherein the wind energy installation has a control device with a current sensor for sensing the electric current which is emitted to a grid (6), so that the power which is emitted from the generator to the grid can be regulated as a function of the current which is sensed by the current sensor and wherein the wind energy installation (2) has an external control input (22) for transferring data from a remote control centre to a control device (20) for the wind energy installation (2), wherein, in operation, control signals from the grid operator or power supply authority who is operating the grid are received via the external control input (22) and the wind energy installation is controlled in accordance with the grid operator's requirement as a function of these control signals from the grid operator, so that the electrical power, namely the magnitude of the current to be fed in, the nature of the current and/or the phase angle, are fed into the grid in a form as required by the grid operator, and wherein the wind energy installation remains connected to the grid when a short circuit or a comparable operating disturbance occurs in the grid, for example with the voltage assuming a value which differs by more than 20% from the nominal value, wherein the wind energy installation has an apparatus for detection of a short circuit in the grid and the wind energy installation has a voltage detection device for detection of the voltage in at least one phase in the grid and the wind energy installation, in the event of a grid short circuit, adjusts the current which is emitted and fed into the grid such that a predetermined limit value I(max) is not exceeded.

2. Method for operation of a wind energy installation according to Claim 1, wherein the power which is emitted from the generator (12) to the load is regulated as a function of the magnitude of the current which is emitted to the load.

3. Method for operation of a wind energy installation according to Claim 1 or 2, wherein the current is an alternating current at a predeterminable frequency.

4. Method according to Claim 3,
wherein the predeterminable frequency corresponds essentially to the grid frequency.

5. Method for operation of a wind energy installation according to one of the preceding claims,
wherein the emitted current does not exceed a predeterminable magnitude, has a predeterminable phase angle and/or contains a predeterminable reaction current component.

6. Method according to Claim 5,
wherein, in the case of polyphase systems, the magnitude, phase angle and/or reaction current component do not exceed the predeterminable value for each phase.

7. Method according to Claim 5 or 6,
wherein a value which is independent of the other phases can be predetermined for each phase.

8. Method for operation of a wind energy installation according to one of the preceding claims,
wherein the current for each phase which is affected by a short circuit is limited to the instantaneous value at the moment of the short circuit.

9. Wind energy installation according to Claim 1,
wherein the control device has a microprocessor (20).

10. Wind energy installation according to Claim 1,
having a phase monitor for detection of the phase angle of the currents and/or voltages in at least one phase in the grid.

11. Method according to Claim 1,
wherein the wind energy installation remains connected to the grid when a short circuit or a comparable operating disturbance occurs in the grid, for example with the voltage assuming a value which differs by more than 40% from the nominal value.

## Revendications

1. Eolienne (2) avec un rotor et un générateur électrique, couplé au rotor, servant à fournir une puissance électrique à un réseau électrique, dans laquelle l'éolienne présente un système de régulation avec un capteur de courant servant à recevoir le courant électrique fourni à un réseau (6) de sorte que la puissance fournie au réseau par le générateur peut être régulée en fonction du courant reçu par le capteur de courant et dans laquelle l'éolienne (2) présente une entrée de commande (22) externe servant à la transmission de données d'une centrale de commande éloignée à un système de régulation (20) de l'éolienne (2), dans laquelle des signaux de commande sont reçus en fonctionnement par l'intermédiaire de l'entrée de commande (22) externe par l'exploitant de réseau ou le fournisseur d'énergie, qui exploite le réseau, et l'éolienne est commandée selon les besoins de l'exploitant de réseau en fonction desdits signaux de commande par l'opérateur de réseau et ainsi la puissance électrique, à savoir la quantité du courant à injecter, le type du courant et/ou l'angle de phase et/ou la position de phase, est injectée dans le réseau sous une forme telle qu'elle est requise par l'exploitant de réseau, et dans laquelle l'éolienne reste sur le réseau quand un court-circuit ou un dysfonctionnement comparable s'installe dans le réseau, par exemple la tension adopte une valeur, qui diverge de plus de 20 % de la valeur théorique, dans laquelle l'éolienne présente un dispositif servant à détecter un court-circuit dans le réseau et l'éolienne présente un système de détection de tension servant à détecter la tension d'au moins une phase dans le réseau et l'éolienne règle, dans le cas d'un court-circuit, le courant fourni, injecté dans le réseau de telle sorte qu'une valeur limite I(max) prédéfinie n'est pas dépassée.

2. Procédé servant à faire fonctionner une éolienne selon la revendication 1,
dans lequel la puissance fournie par le générateur (12) au consommateur est régulée en fonction de la quantité du courant fourni au consommateur.

3. Procédé servant à faire fonctionner une éolienne selon la revendication 1 ou 2,
dans lequel le courant est un courant alternatif avec une fréquence pouvant être prédéfinie.

4. Procédé selon la revendication 3,
dans lequel la fréquence pouvant être prédéfinie correspond sensiblement à la fréquence de réseau.

5. Procédé servant à faire fonctionner une éolienne selon l'une quelconque des revendications précédentes,
dans lequel le courant fourni ne dépasse pas une quantité pouvant être prédéfinie, présente une position de phase pouvant être prédéfinie et/ou contient une fraction de courant réactif.

6. Procédé selon la revendication 5,
dans lequel dans des systèmes multiphasés, la quantité, la position de phase et/ou la fraction de courant réactif pour chaque phase ne dépassent pas la valeur pouvant être prédéfinie.

7. Procédé selon la revendication 5 ou 6,
dans lequel pour chaque phase, une valeur indépendante des phases restantes peut être prédéfinie.

8. Procédé servant à faire fonctionner une éolienne selon l'une quelconque des revendications précédentes,
dans lequel le courant est limité pour chaque phase concernée par le court-circuit à la valeur instantanée au moment du court-circuit.

9. Eolienne selon la revendication 1,
dans laquelle le système de régulation présente un microprocesseur (20).

10. Eolienne selon la revendication 1,
avec un gardien de phase servant à détecter la position de phase des courants et/ou tensions d'au moins une phase dans le réseau.

11. Eolienne selon la revendication 1,
dans laquelle l'éolienne reste sur le réseau quand un court-circuit ou un dysfonctionnement comparable s'installe dans le réseau, par exemple la tension adopte une valeur, qui diverge de plus de 40 % de la valeur théorique.
